# EUROPEAN PATENT APPLICATION

(11) **EP 4 793 517 A1**
(43) Date of publication of application: **19.08.2026**
(21) Application number: 25216981.8
(22) Date of filing: 19.11.2025
(51) Int. Cl.: F16C 17/00, F16C 29/02, F16C 33/12, F16C 33/14, F16C 33/20, F16C 33/24

(54) **SLIDING MEMBER**

(30) Priority: 18.02.2025 JP 2025024305
(71) Applicant: Daido Metal Co., Ltd., Nagoya-shi, Aichi (JP)
(72) Inventor: YAMAMOTO, Ayako, Aza Tendoshinden, Oaza Maehara, Inuyama-shi, Aichi (JP); KOYAMA, Takato, Aza Tendoshinden, Oaza Maehara, Inuyama-shi, Aichi (JP); IWATA, Tsuyoshi, Aza Tendoshinden, Oaza Maehara, Inuyama-shi, Aichi (JP)
(74) Representative: AOMB Polska Sp. z.o.o.

(57) **Abstract**

**A sliding** member 10 includes a substrate 13, an alloy part 11, and a resin part 12. The alloy part 11 is a porous material formed with a Cu-based alloy containing Sn. The resin part 12 is impregnated in pores formed with the alloy part 11. The sliding member 10 has a sea-island structure in which the alloy part 11 is distributed as an island-shaped alloy-exposed portion 111 in the resin part 12 as a sea, on any exposed surface 20 exposed by cutting. When any observation region 22 is set in the exposed surface 20, and five inscribed circles with the largest diameters among inscribed circles inscribing the alloy-exposed portion 111 distributed in the resin part 12 in this observation region 22 are defined as first inscribed circles 31, all diameters D of the first inscribed circles 31 satisfy 40 µm ≤ D ≤ 240 µm.

## Description

### BACKGROUND OF THE INVENTION

### Field of the Invention

The present embodiment relates to a sliding member.

### Description of the Related Art

Conventionally known in a sliding member having a porous alloy part and a resin part impregnated in pores of this alloy part (Japanese Patent Laid-Open No. 2015-196419). Such a sliding member has an exposed surface where the alloy part and the resin part are exposed coexisting on a side sliding on a counterpart member. Containing of the resin part having a small coefficient of friction on the exposed surface reduces friction of the sliding member to improve seizure resistance. Meanwhile, containing of the alloy part having high strength on the exposed surface improves wear resistance of the sliding member.

However, the seizure resistance of the sliding member varies depending on a ratio between the alloy part and the resin part on the exposed surface. Thus, there is a problem that merely increasing the exposure of the alloy part on the exposed surface cannot balance with the resin part, which causes difficulty of further improvement of the seizure resistance.

An object is to provide a sliding member to further improve the seizure resistance.

### SUMMARY OF THE INVENTION

A sliding member according to one embodiment includes a substrate, an alloy part, and a resin part. The alloy part is provided on one end surface side of the substrate, and is a porous material formed with a Cu-based alloy containing Sn. The resin part is impregnated in pores formed with the porous alloy part. In the **sliding** member according to one embodiment, the alloy part and the resin part coexist, and a proportion of the alloy part is large on a side close to the substrate in a thickness direction. In the sliding member according to one embodiment, in any exposed surface to be exposed by removal from an end surface opposite to the substrate to a side of the substrate, the alloy part and the resin part form a sea-island structure in which the alloy part is distributed as an island-shaped alloy-exposed portion in the resin part as a sea. In the sliding member according to one embodiment, in the exposed surface, when a surface having a proportion of an area of the alloy-exposed portion in this exposed surface being within a preset set range is defined as an observation surface, and when any observation region is set in the observation surface, and five inscribed circles with the largest diameters among inscribed circles inscribing the alloy-exposed portion distributed in the resin part in this observation region are defined as first inscribed circles,
all diameters D of the first inscribed circles satisfy 40 µm ≤ D ≤ 240 µm.

The present inventors have found that the seizure resistance is improved by specifying the relationship between the alloy part and the resin part on the exposed surface. Specifically, the sliding member in which the alloy part and the resin part coexist has a property in which the alloy part has high strength but large coefficient of friction, meanwhile the resin part has a small coefficient of friction but low strength. Thus, the seizure resistance of the sliding member is improved by appropriately controlling the alloy-exposed portion and the resin part exposed coexisting on the exposed surface. Particularly, the diameters D of the first inscribed circles, which are included in the alloy-exposed portion, satisfy 40 µm ≤ D ≤ 240 µm. This allows the alloy-exposed portion exposed on the exposed surface to have a size not excessively small and not excessively large so as to include the first inscribed circles with the diameters D, and allows the distribution of the resin part to be appropriate. Therefore, balance with the function to be exhibited by the resin part can be achieved to further improve the seizure resistance.

### BRIEF DESCRIPTION OF THE DRAWINGS

FIG. 1 is a schematic view illustrating an exposed surface of a sliding member according to one embodiment;
FIG. 2 is a schematic sectional view illustrating structure of a sliding member according to one embodiment;
FIG. 3 is a schematic view showing relationship between a cutting position and an exposed surface of a sliding member according to one embodiment;
FIG. 4 is a schematic view for describing a distance between centers of first inscribed circles in an alloy part of a sliding member according to one embodiment;
FIG. 5 is a schematic view for describing a first inscribed circle and a second inscribed circle in an alloy part of a sliding member according to one embodiment;
FIG. 6 is an outline view showing test results of Examples and Comparative Examples of sliding members according to one embodiment;
FIG. 7 is an outline view showing test results of Examples and Comparative Examples of sliding members according to one embodiment;
FIG. 8 is an outline view showing test results of Examples and Comparative Examples of sliding members according to one embodiment;
FIG. 9 is an outline view showing test results of Examples and Comparative Examples of sliding members according to one embodiment; and
FIG. 10 is an outline view showing test results of Examples of sliding members according to one embodiment.

### DETAILED DESCRIPTION OF THE PREFERRED EMBODIMENTS

Hereinafter, a sliding member according to one embodiment will be described in detail based on the drawings.

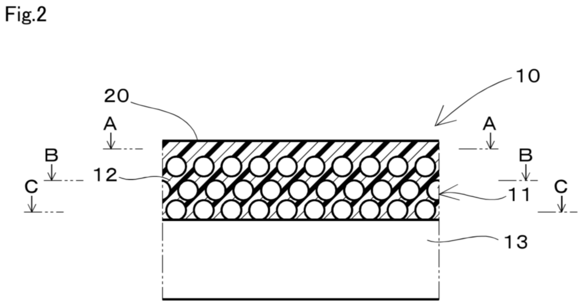

As illustrated in FIG. 2, a sliding member 10 has an alloy part 11 and a resin part 12. The alloy part 11 is of a Cu-based alloy containing Sn, and formed with so-called bronze. The alloy part 11 is formed by sintering granular powder, and is a porous material having a plurality of pores. As the granular alloy powder to constitute the alloy part 11, powder having any shape such as a spherical shape and an irregular shape may be used, for example.

The resin part 12 is impregnated in the pores of this alloy part 11. That is, the sliding member 10 has the porous alloy part 11 and the resin part 12 impregnated in the plurality of the pores of this alloy part 11. This configuration allows the sliding member 10 to have a state where the Cu-based alloy constituting the alloy part 11 and the resin constituting the resin part 12 coexist. The sliding member 10 may have a substrate 13. The alloy part 11 and the resin part 12 are provided on one surface side of the substrate 13. As the substrate 13, Fe-based alloys such as carbon steel and stainless steel, Al-based alloys, Cu-based alloys, etc. may be used, for example.

The alloy part 11 has different proportions of the pores in the thickness direction. Specifically, in the alloy part 11, a side close to the substrate 13 is relatively dense, and a side far from the substrate 13 is relatively sparse. In more detail, in the alloy part 11 within a range from an end on the side far from the substrate 13 to a boundary part set within 50% in the thickness direction of the substrate 13, a density on the side far from the substrate 13 is small, and a density on the side close to the substrate 13 is large. Meanwhile, within a range on the substrate 13 side from the boundary part, the alloy part 11 has an approximately constant density in the thickness direction. This is because the alloy part 11 is formed by sintering the alloy powder. That is, the alloy powder to be a material for the alloy part 11 is scattered on the substrate 13 and then sintered. Thus, the alloy powder to form the alloy part 11 becomes denser on the side closer to the substrate 13 within the range from the end of the side far from the substrate 13 to the boundary part. As a result, the alloy part 11 has the different proportions of the pores in the thickness direction. In addition, since the proportions of the pores in the alloy part 11 are different in the thickness direction as noted above, a proportion of the resin part 12 present on the side closer to the substrate 13, which has fewer pores, is smaller, and a proportion of the resin part 12 present on the side far from the substrate 13, which has more pores, is larger. The pores in the alloy part 11 are regulated by size and shape of the alloy powder to form the alloy part 11, the scattering state of the alloy powder, etc.

The resin part 12 is formed with one or more resins selected from, for example, polyether ether ketone (PEEK), polyamideimide, polyimide, polyamide, phenol, epoxy, polyacetal (POM), polyphenylene sulfide, polyethylene, and fluorine-containing resin. The fluorine-containing resin is preferably ethylene-tetrafluoroethylene (ETFE) or polyvinylidene fluoride (PVDF), and particularly preferably polytetrafluoroethylene (PTFE), perfluoroalkoxyalkane (PFA), or perfluoroethylene-propene (FEP). In the resin part 12, a filler, etc. may be added. As the filler, a solid lubricant, a fibrous agent, other fillers, etc. are used, for example. The solid lubricant contributes to reduction in the coefficient of friction of the resin part 12. As the solid lubricant, graphite, molybdenum disulfide, tungsten disulfide, boron nitride, polytetrafluoroethylene (PTFE), etc. are used, for example. The fibrous agent contributes to improvement of the strength of the resin part 12. As the fibrous agent, glass fiber, ceramic fiber, carbon fiber, aramid fiber, acryl fiber, polyvinyl alcohol fiber, etc. are used, for example. The other fillers are used for controlling the resin part 12 to have an appropriate property, for increasing the amount or improving the density of resin part 12, although not particularly contributing to the property of the resin part 12, etc. As the other fillers, calcium fluoride, calcium carbonate, iron oxide, zinc oxide, magnesium oxide, calcium phosphate, talc, mica, muratite, potassium titanate, molybdenum carbide, etc. are used, for example.

The resin material to form the resin part 12 preferably has a contact angle W with water of 60° ≤ W ≤ 130°. Further, the resin material to form the resin part 12 more preferably has a contact angle W with water of 70° ≤ W ≤ 110°. The contact angle is measured in accordance with JIS3257:1999 by using a contact angle meter (Kyowa Interface Science Co., Ltd.: DM300). The contact angle W of the resin part 12 with water is correlated with compatibility between a lubricant oil used in sliding with a counterpart member, not illustrated, and the sliding member 10. That is, a resin having a large contact angle W with water has a property of a large contact angle with the lubricant oil. In other words, a resin having a large contact angle W with water has low wettability with the lubricant oil, and easily repels the lubricant oil. Accordingly, in the sliding member 10 in which the alloy part 11 and the resin part 12 coexist, a large contacting angle W of the resin part 12 with water facilitates gathering of the lubricant oil to the alloy part 11 rather than the resin part 12. The lubricant oil gathered to the alloy part 11 easily forms an oil film on the alloy part 11. As a result, in sliding between the sliding member 10 and the counterpart member, seizure between the sliding member 10 and the counterpart member is reduced.

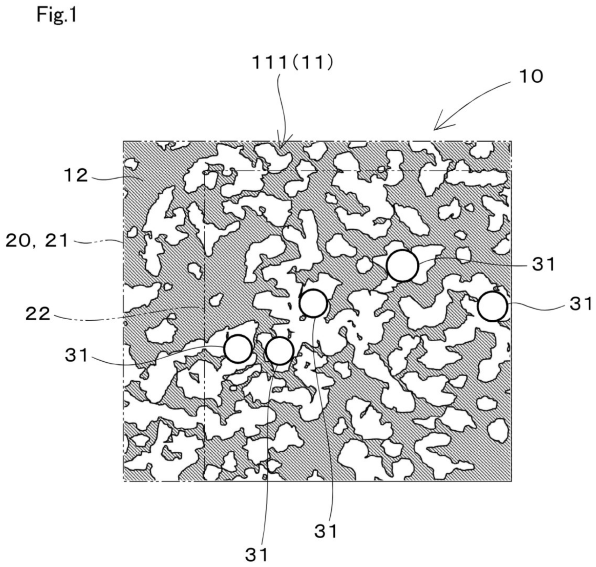

As above, the alloy part 11 and the resin part 12 coexist in the sliding member 10. Thus, an exposed surface 20 is formed on the end surface, as illustrated in FIG. 1, when the surface of the sliding member 10 is removed to a predetermined position in the thickness direction. The surface of the sliding member 10 is removed to the predetermined position in the thickness direction by cutting or grinding, for example. The exposed surface 20 is a surface to be exposed when the sliding member 10 in which the alloy part 11 and the resin part 12 coexist is cut from an end surface opposite to the substrate 13 to the predetermined position on the substrate 13 side in the thickness direction. In the sliding member 10, the resin part 12 is impregnated in the porous alloy part 11. Thus, in the sliding member 10, the proportion of the pores in the alloy part 11 is smaller on the side closer to the substrate 13, and the proportion of the pores in the alloy part 11 is larger on the side far from the substrate 13, as noted above. As a result, the exposed surface 20 has a small proportion of an alloy-exposed portion 111, described later, being the alloy part 11 on the side far from the substrate 13, and the large proportion of the resin part 12, in terms of area. Meanwhile, the exposed surface 20 has a larger proportion of the alloy-exposed portion 111 on the side close to the substrate 13, and a small proportion of the resin part 12, in terms of an area proportion. This exposed surface 20 forms a sliding surface when the sliding member 10 slides on the counterpart member.

In the present embodiment, in the exposed surface 20 with the varied proportion of the alloy part 11 in the thickness direction as above, the exposed surface 20 having a proportion of an area of the alloy-exposed portion 111 within a preset set range S is defined as an observation surface 21. Specifically, the observation surface 21 is a surface having the proportion of the area of the alloy-exposed portion 111, which is the set range S, of 5% ≤ S ≤ 60% in the exposed surface 20. As above, the set range S is set so that the proportion of the area of the alloy-exposed portion 111 satisfies 5% ≤ S ≤ 60%. Hereinafter, the proportion of the area of the alloy-exposed portion 111 in the observation surface 21 is referred to as an exposure rate.

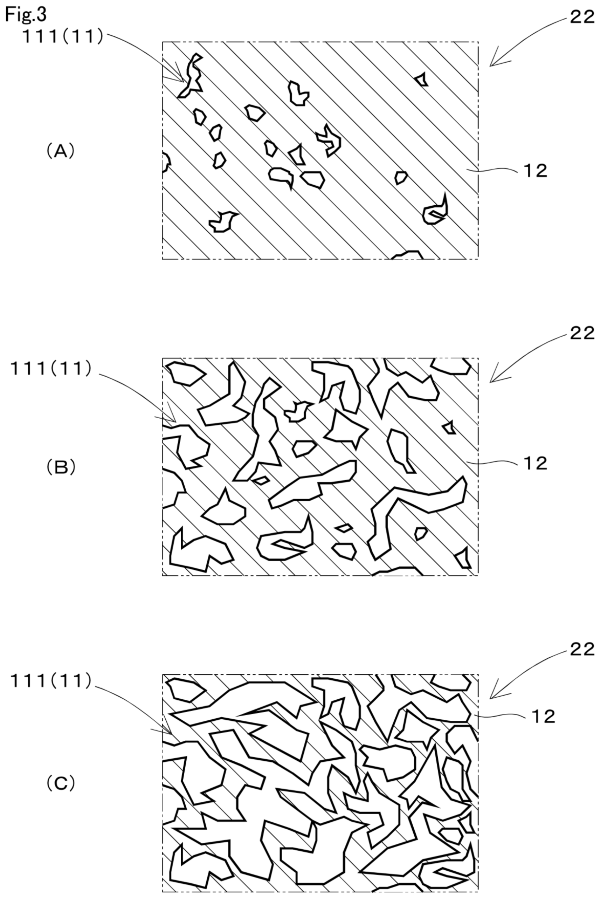

The exposure rate of the alloy-exposed portion 111 on the exposed surface 20 varies in the thickness direction. For example, as illustrated in FIG. 3(A), almost no alloy-exposed portion 111 is exposed on the exposed surface 20 on the side far from the substrate 13. In contrast, the exposed surface 20 has the exposure rate increasing toward the substrate 13, as illustrated in FIG. 3(B) and FIG. 3(C). FIG. 3 is a view schematically illustrating the exposed surface 20 that appears when the sliding member 10 illustrated in FIG. 2 is cut along the line corresponding to A-A, B-B, or C-C. That is, FIG. 3(A) is a schematic view illustrating the exposed surface 20 along the A-A line, FIG. 3(B) is a schematic view illustrating the exposed surface 20 along the B-B line, and FIG. 3(C) is a schematic view illustrating the exposed surface 20 along the C-C line. All these alloy-exposed portions 111 illustrated in FIG. 3 are shown with extremely simplified shape for facilitating understanding of the exposed surface 20. Note that, in the alloy part 11, the pores on the boundary portion with the substrate 13 is not zero. Thus, the alloy part 11 and the resin part 12 coexist even near the substrate 13, and the exposure rate of the alloy-exposed portion 111 in the exposed surface 20 does not reach 100%.

The exposed surface 20 exhibits the sea-island structure in which the alloy part 11 is distributed as the island-shaped alloy-exposed portion 111 in the resin part 12 as the sea, as illustrated in FIG. 1 and FIG. 3. That is, the exposed surface 20 exhibits the state where a plurality of the alloy-exposed portions 111 having an irregular shape are dispersed in the resin part 12. The alloy part 11 is dispersed in the resin part 12 on the exposed surface 20 as the large or small island-shaped alloy-exposed portions 111 having various areas. FIG. 1 and FIG. 3 illustrate the resin part 12 forming the sea in shading, and illustrate the state where the alloy part 11 forming the islands is dispersed in this resin part 12 as the alloy-exposed portion 111. In the present embodiment, an observation field with 3 mm × 2 mm is set as an observation region 22 in the observation surface 21 having the exposure rate within the set range S in this exposed surface 20. This observation region 22 includes the plurality of the island-shaped alloy-exposed portions 111. On the alloy-exposed portions 111 included in the observation region 22, an inscribed circle is set. One or more inscribed circles are set on one alloy-exposed portion 111. That is, two or more inscribed circles may be set on one alloy-exposed portion 111. For example, increase in the exposure rate in the exposed surface 20 increases an area of the one alloy-exposed portion 111. In this case, two or more inscribed circles may be set on one large alloy-exposed portion 111. As above, one or more inscribed circles are set on the one alloy-exposed portion 111.

In this observation region 22, five inscribed circles having the largest diameters set by inscribing the alloy-exposed portion 111 are selected as first inscribed circles 31. The five first inscribed circles 31 are selected so as not to be overlapped with each other. When a plurality of the inscribed circles are settable on one alloy-exposed portion 111, the one alloy-exposed portion 111 may include one or more and five or less first inscribed circles 31. In the present embodiment, all of the diameters D of these five first inscribed circles 31 satisfy 40 µm ≤ D ≤ 240 µm. That is, the diameters D of the five first inscribed circles 31 having the largest diameters among the inscribed circles set on the island-shaped alloy-exposed portion 111 included in the observation region 22 are all within the range of 40 µm ≤ D ≤ 240 µm.

As noted above, the resin part 12 has low compatibility with the lubricant oil, and has a property of hardly wetting with the lubricant oil compared with the alloy part 11. Thus, in a case of the present embodiment in which the island-shaped alloy-exposed portion 111 is surrounded by the resin part 12, the wear resistance and the seizure resistance are affected by the proportion of exposure of this alloy-exposed portion 111 and the resin part 12, namely the exposure rate. If the diameter D of the first inscribed circle 31 is smaller than 40 µm, the alloy-exposed portion 111 exposed on the exposed surface 20 is excessively small. Thus, if the diameter D of the first inscribed circle 31 is smaller than 40 µm, the proportion of the resin part 12 on the exposed surface 20 increases to decrease the effect of exposure of the alloy part 11 by the alloy-exposed portion 111. That is, if the diameter D of the first inscribed circle 31 is smaller than 40 µm, the wettability of the resin part 12 becomes dominant on the exposed surface 20. Therefore, the lubricant oil is easily repelled on the exposed surface 20. As a result, the lubricant oil is repelled by the resin part 12 unless the lubricant oil is sufficiently supplied on the sliding portion between the sliding member 10 and the counterpart member, which causes insufficient holdability by the alloy-exposed portion 111. Accordingly, the diameter D of the first inscribed circle 31 of smaller than 40 µm leads to deterioration in the seizure resistance.

Meanwhile, if the diameter D of the first inscribed circle 31 is larger than 240 µm, the alloy-exposed portion 111 becomes excessively large. Thus, if the diameter D of the first inscribed circle 31 is larger than 240 µm, the proportion of the resin part 12 decreases to excessively increase the wettability on the alloy-exposed portion 111 with the lubricant oil, which leads to deterioration in the seizure resistance. That is, if the diameter D of the first inscribed circle 31 is larger than 240 µm, the wettability of the alloy-exposed portion 111 becomes dominant on the exposed surface 20. Thus, the exposed surface 20 becomes easily wet with the lubricant oil, and the lubricant oil is easily present on the alloy-exposed portion 111 in the exposed surface. As a result, temperature of the lubricant oil on the sliding portion rises unless the lubricant oil is sufficiently supplied on the sliding portion between the sliding member 10 and the counterpart member. Accordingly, the diameter D of the first inscribed circle 31 of larger than 240 µm leads to deterioration in the seizure resistance. From the above, the diameter D of the first inscribed circle 31 of the alloy-exposed portion 111 on the exposed surface 20 is set to be 40 µm ≤ D ≤ 240 µm. Setting the diameter D of the first inscribed circle 31 as above can improve the seizure resistance.

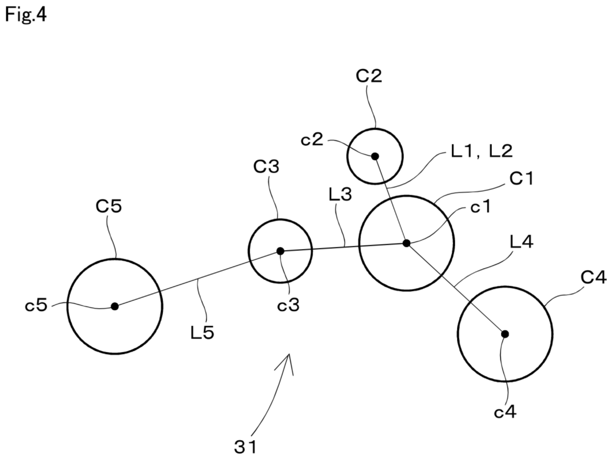

In the alloy-exposed portion 111, a distance L being an average value of the shortest distances between centers of the first inscribed circles 31 is set to be 350 µm ≤ L ≤ 1300 µm. Here, the distance L is set as follows. As an example, the observation region 22 includes inscribed circles C1 to C5 as the five first inscribed circles 31 as illustrated in FIG. 4. Among these, the inscribed circle C1 is most close to the inscribed circle C2 among the inscribed circles C2 to C5. Thus, the shortest distance about the inscribed circle C1 is a distance L1 between a center c1 of the inscribed circle C1 and a center c2 of the inscribed circle C2. Similarly, the inscribed circle C2 is most close to the inscribed circle C1 among the inscribed circles C1 and C3 to C5. Thus, the shortest distance about the inscribed circle C2 is a distance L2, which is equal to the above distance L1. The inscribed circle C3 is most close to the inscribed circle C1. Thus, the shortest distance about the inscribed circle C3 is a distance L3 between a center c3 of the inscribed circle C3 and the center c1 of the inscribed circle C1. Further, the inscribed circle C4 is most close to the inscribed circle C1, and the inscribed circle C5 is most close to the inscribed circle C3. Thus, the shortest distance about the inscribed circle C4 is a distance L4 between a center c4 and the center c1, and the shortest distance about the inscribed circle C5 is a distance L5 between a center c5 and the center c3. As above, the distances L1 to L5 are measured about the inscribed circles C1 to C5. The distance L being the average value thereof is defined as L = (L1+L2+L3+L4+L5)/5. That is, the distance L is the average value averaging the calculated distances L1 to L5 from the center of each of the inscribed circles C1 to C5 included in the observation region 22 to the center of the other closest inscribed circles C1 to C5.

This distance L indicates a degree of dispersion of a large portion such that the first inscribed circle 31 is set, in the alloy-exposed portion 111 on the exposed surface 20. That is, the alloy-exposed portion 111 exhibits a complex shape including combined wide regions where the first inscribed circle 31 is settable and narrow regions where the first inscribed circle 31 cannot be set. Here, the distance L indicates a degree of dispersion of this region where the first inscribed circle 31 is settable. In other words, the distance L indicates a degree of dispersion of the region where the first inscribed circle 31 is settable regardless of the entire area of the alloy-exposed portion 111. Therefore, a small distance L indicates that the region where the first inscribed circle 31 is settable is present with a relatively close distance on the exposed surface 20. Since the alloy-exposed portion 111 has high wettability compared with the resin part 12, the region where the first inscribed circle 31 is settable increases holdability of the lubricant oil.

In the alloy-exposed portion 111, an excessively small distance L decreases dispersibility of the region where the first inscribed circle 31 is settable. That is, if the distance L becomes small, the portion having high ability to hold the lubricant oil is present in the alloy-exposed portion 111 close to each other. Thus, the lubricant oil is held within a relatively narrow range on the exposed surface 20. That is, on the exposed surface 20, the region of the resin part 12, which repels the lubricant oil, becomes large. As a result, decrease in the lubricant oil supplied on the sliding portion between the sliding member 10 and the counterpart member causes insufficient lubrication on the sliding portion due to the lubricant oil, which inhibits formation of the oil film to easily lead to deterioration in the seizure resistance.

Meanwhile, in the alloy-exposed portion 111, an excessively large distance L increases the dispersibility of the region where the first inscribed circle 31 is settable. That is, if the distance L increases, the portion having high ability to hold the lubricant oil is present in the alloy-exposed portion 111 distanced from each other. Thus, the lubricant oil is dispersedly held on the exposed surface 20. Here, decrease in the lubricant oil supplied on the sliding portion between the sliding member 10 and the counterpart member retains the seizure resistance because the lubricant oil is dispersedly held. In contrast, if the distance L increases, the portion to hold the lubricant oil is dispersed, and consequently causes insufficient formation of the oil film to easily lead to deterioration in the wear resistance.

Here, the distance L is set to be 350 µm ≤ L ≤ 1300 µm. According to this, the relatively large alloy-exposed portion 111 that can hold the lubricant oil is appropriately dispersed on the exposed surface 20. Thus, if the supplying of the lubricant oil becomes insufficient, the lubricant oil held in the alloy-exposed portion 111 is relatively uniformly supplied on the exposed surface 20. Therefore, the seizure resistance can be retained without deterioration in the wear resistance.

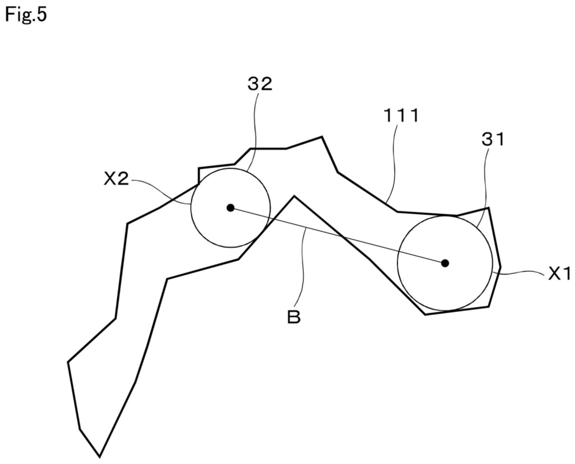

From the viewpoints of retainability of the wear resistance and improvement of the seizure resistance, the alloy-exposed portion 111 on the exposed surface 20 preferably exhibits a complex and distorted shape in which various shapes are combined, not a circular shape or a simple polygonal shape. That is, one alloy-exposed portion 111 preferably has a complex shape in which an inscribed circle is settable other than the first inscribed circle 31, and these two inscribed circles are preferably appropriately distanced. Specifically, when two or more inscribed circles are settable on one alloy-exposed portion 111 as illustrated in FIG. 5, an inscribed circle having the second largest diameter after the first inscribed circle 31 is defined as a second inscribed circle 32. In this case, a distance B between a center X1 of the first inscribed circle 31 and a center X2 of the second inscribed circle 32 satisfies 10 µm ≤ B ≤ 450 µm. If the distance B is smaller than 10 µm, one alloy-exposed portion 111 tends to have a circular shape or a simple polygonal shape. Meanwhile, if the distance B is larger than 450 µm, one alloy part 11 has the complex shape but becomes excessively large, which leads to deterioration in the seizure resistance. From the above, as for the alloy part 11, the second inscribed circle 32, not limited to the first inscribed circle 31, is preferably settable in the alloy-exposed portion 111 where the first inscribed circle 31 is settable.

The distance B between the center X1 and the center X2 of the first inscribed circle 31 and the second inscribed circle 32 in which one alloy-exposed portion 111 is set preferably satisfies 10 µm ≤ B ≤ 450 µm. Note that a plurality of the inscribed circles may be set in one alloy-exposed portion 111 with some shapes of the alloy-exposed portion 111. This alloy-exposed portion 111 may include two or more first inscribed circles 31. For example, in a case where one alloy-exposed portion 111 includes an inscribed circle Ca and an inscribed circle Cb having a smaller diameter than the inscribed circle Ca, as two first inscribed circles 31, when the inscribed circle Ca is the first inscribed circle 31, the inscribed circle Cb is the second inscribed circle 32. In a case where the identical alloy-exposed portion 111 includes an inscribed circle Cc having a smaller distance than the inscribed circle Cb, when the inscribed circle Cb is the first inscribed circle 31, this inscribed circle Cc can be the second inscribed circle 32. As above, when a plurality of the inscribed circles are set in one alloy-exposed portion 111, the first inscribed circle 31 and the second inscribed circle 32 are determined depending on the size of the diameters of the two inscribed circles.

In the present embodiment, the exposure rate of the alloy-exposed portion 111 is set to be 60% or less on the exposed surface 20. That is, the upper limit of the aforementioned set range S is 60%. As noted above, the alloy-exposed portion 111 having an increased exposure rate increases wettability with the lubricant oil to lead to deterioration in the seizure resistance. Therefore, in the present embodiment, the upper limit of the exposure rate of the exposed surface 20 is set to be 60%. As noted above, in the sliding member 10 of the present embodiment, the resin to form the resin part 12 is impregnated in the porous alloy part 11, and the surface opposite to the substrate 13 is cut to form the exposed surface 20. Thus, the exposure rate of the exposed surface 20 does not become 0%. An excessively low exposure rate of the exposed surface 20 hardly achieves the wear resistance due to the alloy part 11. Thus, in the present embodiment, the exposure rate of the exposed surface 20 is set to be 5% or more. That is, the lower limit of the set range S is 5%.

Next, a method for manufacturing the sliding member 10 according to one embodiment will be described.

The powder to form the alloy part 11 is scattered on one end surface of the substrate 13. In this case, the powder has an average particle diameter of 50 µm to 200 µm, and a standard deviation of the particle diameter is 10 µm to 45 µm. The powder preferably has an average particle diameter of 70 µm to 180 µm. The standard deviation of the particle diameter is more preferably 15 µm to 37 µm. The average particle diameter of the powder used for sintering typically exhibits the normal distribution within a specific range. In the present embodiment, the average particle diameter is set to be 50 µm to 200 µm, and the standard deviation is set to be 10 µm to 45 µm to allow the powder to be the material to have relatively small size variation. This achieves generation of the alloy part 11 having the alloy-exposed portion 111 with the aforementioned diameter of the inscribed circle unique to the present Examples.

The scattered powder is heated and sintered in a reductive atmosphere. This allows the powder to be sintered to generate the porous alloy part 11 having a plurality of the pores. The resin to form the resin part 12 is applied on the generated porous alloy part 11 and then pressurized. As for the resin to form the resin part 12, the method is not limited to applying. The resin may be scattered as powder on the alloy part 11, or provided as a sheet-shaped material from pellets may be provided on the alloy part 11. The pressurized resin is sintered to form the resin part 12 impregnated in the alloy part 11. The method for providing the resin and the sintering temperature are set according to the properties of the resin to form the resin part 12.

The sliding member 10 in which the resin part 12 is impregnated in the alloy part 11 is formed in a predetermined band shape, and then formed in a cylindrical shape as a bushing. The bushing having the sliding member 10 is formed as the sliding member 10 having the exposed surface 20 by, for example, attaching the bushing to a structure such as a housing, and then removing the inner cylindrical surface by cutting, for example. In this case, a thickness of the alloy part 11 is set to be about 0.2 mm to 0.4 mm, for example.

Hereinafter, Examples of the sliding member 10 according to the present embodiment will be described.

The seizure resistance of Examples and Comparative Examples of the present embodiment were evaluated by using a thrust sliding tester.

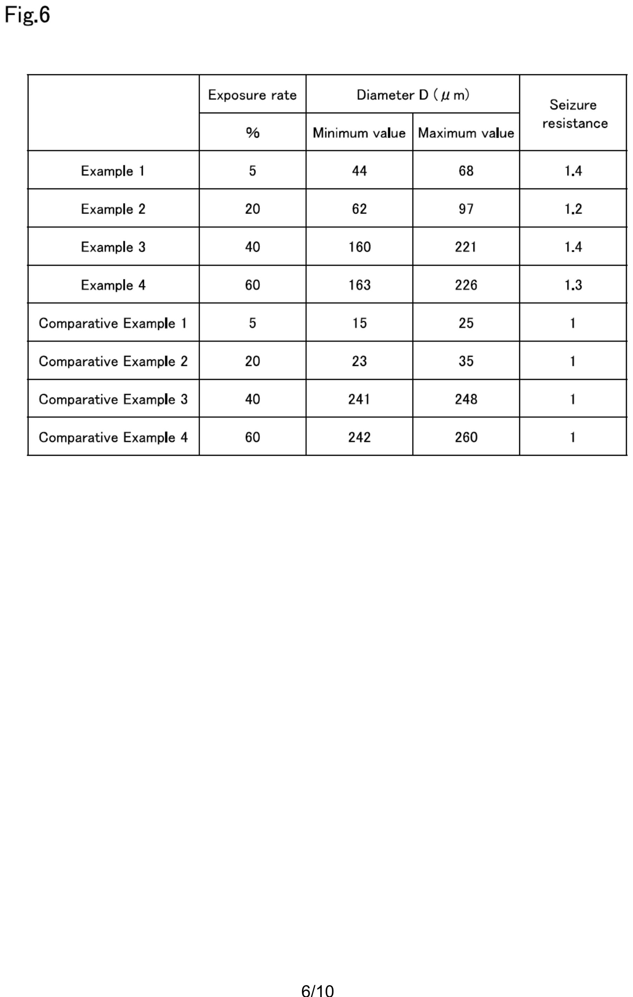

Specimens of Examples and Comparative Examples were slid at a speed of 1.5 m/s with quenched S55C as a counterpart member. The specimen and the counterpart member were slid in a container filled with a lubricant oil at a load of 3 MPa for 10 minutes, then the lubricant oil was removed from the container, and the sliding was continued at a load of 6 MPa until seizure occurred. Then, a time from the removal of the lubricant oil from the container to the seizure occurred on the specimen was measured. The seizure resistance of Examples was evaluated based on a degree of improvement of this time to seizure relative to a time to the seizure of Comparative Example with the same resin material and the same exposure rate being 1. For example, when the evaluation of the seizure resistance of Example shown in FIG. 6 is "1.1", the time to seizure of Comparative Example was "10 minutes", which indicates that the time to seizure of Example with the same resin material and the same exposure rate as of this Comparative Example is "11 minutes".

In Examples and Comparative Examples, steel was used as the substrate 13. In Example 1 to Example 4, spherical bronze-based alloy having an average particle diameter of 50 µm and a standard deviation of 12 µm was used for the metal powder to form the alloy part 11. In Example 5 to Example 8, spherical bronze-based alloy having an average particle diameter of 200 µm and a standard deviation of 43 µm was used for the metal powder to form the alloy part 11. In Example 9 to Example 12, irregular-shaped bronze-based alloy having an average particle diameter of 110 µm and a standard deviation of 28 µm was used for the metal powder to form the alloy part 11. In Example 13 to Example 16, irregular-shaped bronze-based alloy having an average particle diameter of 110 µm and a standard deviation of 32 µm was used for the metal powder to form the alloy part 11.

In Example 1 to Example 4, PTFE with added graphite at 15 vol% was used for the resin to form the resin part 12. In Example 5 to Example 8, PEEK with added PTFE at 10 vol% and added graphite at 5 vol% was used for the resin to form the resin part 12. In Example 9 to Example 12, POM with an added pigment was used for the resin to form the resin part 12. In Example 13 to Example 16, polyamide resin with added graphite at 10 vol% was used for the resin to form the resin part 12. In Example 1 to Example 4, the contact angle of the resin part 12 with water was 130°. In Example 5 to Example 8, the contact angle of the resin part 12 with water was 60°. In Example 9 to Example 12, the contact angle of the resin part 12 with water was 70°. In Example 13 to Example 16, the contact angle of the resin part 12 with water was 60°.

In all Comparative Example 1 to Comparative Example 16, spherical bronze-based alloy having an average particle diameter of 150 µm and a standard deviation of 48 µm was used for the metal powder to form the alloy part 11. As for the resin to constitute the resin part 12, Comparative Example 1 to Comparative Example 4 were the same as Example 1 to Example 4, Comparative Example 5 to Comparative Example 8 were the same as Example 5 to Example 8, Comparative Example 9 to Comparative Example 12 were the same as Example 9 to Example 12, and Comparative Example 13 to Comparative Example 16 were the same as Example 13 to Example 16.

The obtained specimens of Examples and Comparative Examples were ground from the surface opposite to the substrate 13 so that the exposure rate was 5%, 20%, 40%, or 60%. In Examples and Comparative Examples, the diameters D of the five first inscribed circles were measured.

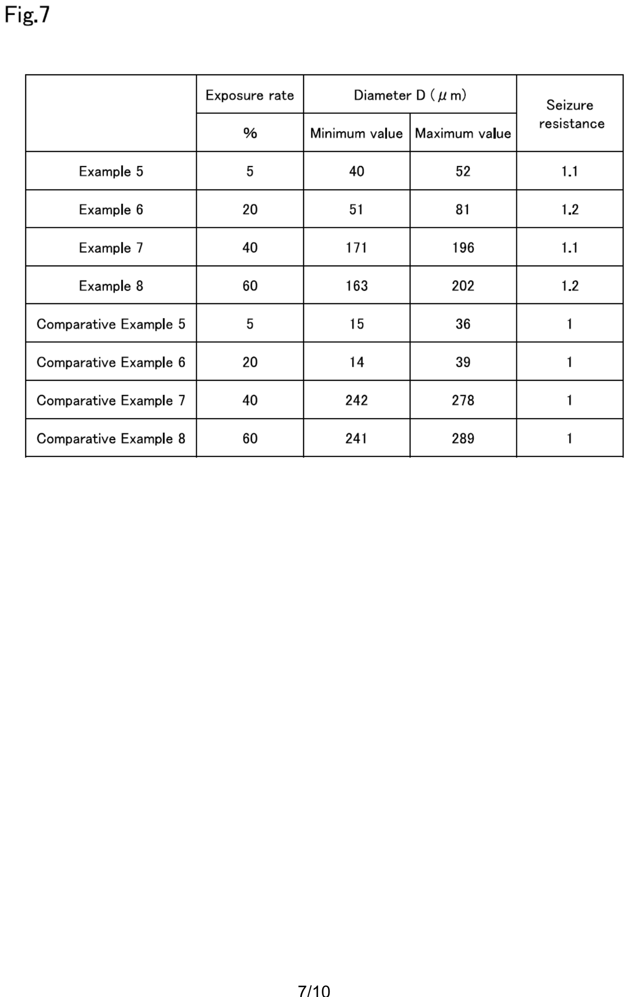

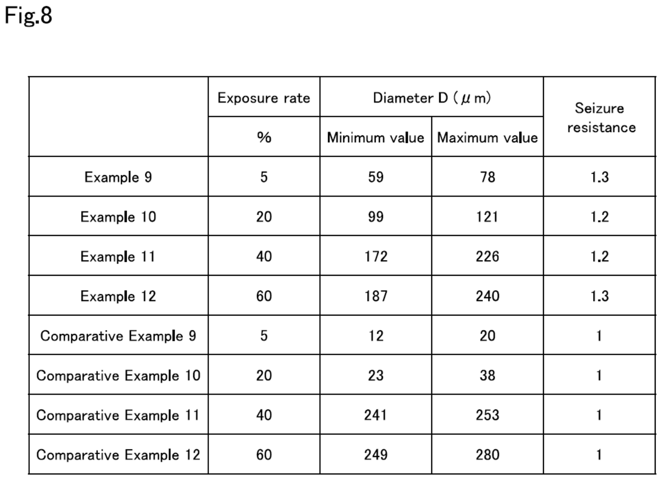

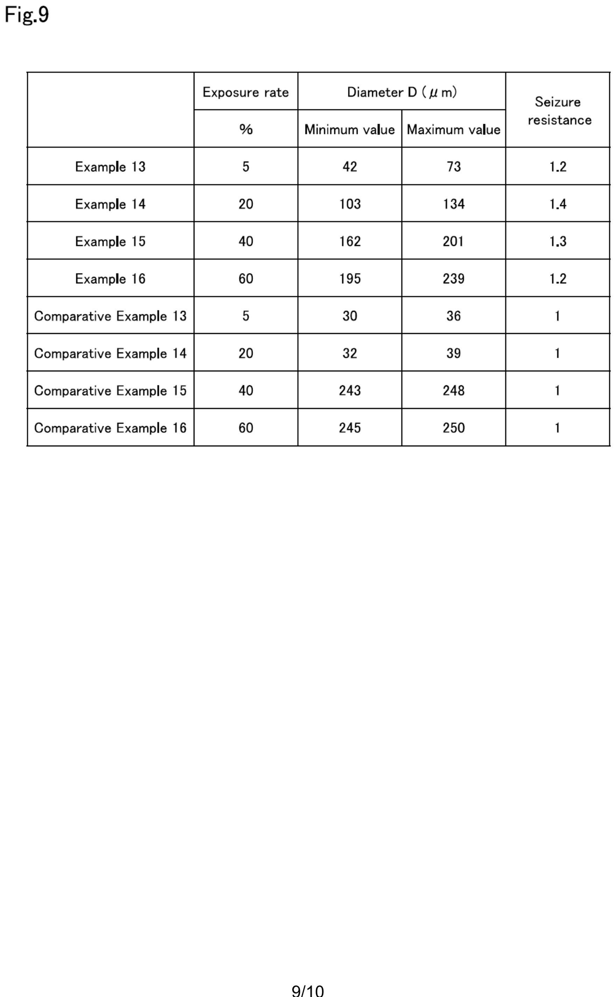

As shown in FIG. 6 to FIG. 9, the seizure resistance is improved in all Example 1 to Example 16 compared with Comparative Example 1 to Comparative Example 16 in which the resin part 12 is formed with the same resin and the exposure rate is set to be equal. This indicates that the seizure resistance is improved in Example 1 to Example 16 in which the diameter D of the first inscribed circle is within 40 µm ≤ D ≤ 240 µm.

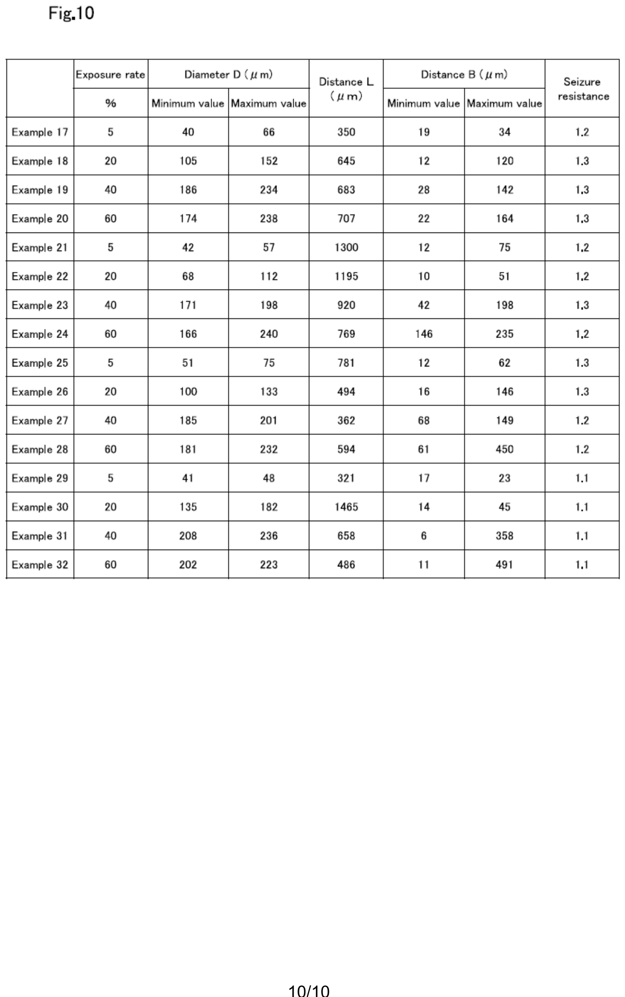

As shown in FIG. 10, investigated in Example 17 to Example 32 was an effect of the distance L between the centers of the first inscribed circles 31 and the distance B between the centers of the first inscribed circle 31 and the second inscribed circle 32 on the seizure resistance.

In Example 17 to Example 20, irregular-shaped bronze-based alloy having an average particle diameter of 70 µm and a standard deviation of 15 µm was used for the metal powder to form the alloy part 11. In Example 21 to Example 24, spherical bronze-based alloy having an average particle diameter of 110 µm and a standard deviation of 37 µm was used for the metal powder to form the alloy part 11. In Example 25 to Example 28, spherical bronze-based alloy having an average particle diameter of 180 µm and a standard deviation of 17 µm was used for the metal powder to form the alloy part 11. In Example 29, spherical bronze-based alloy having an average particle diameter of 50 µm and a standard deviation of 10 µm was used for the metal powder to form the alloy part 11. In Example 30 to Example 31, spherical bronze-based alloy having an average particle diameter of 200 µm and a standard deviation of 45 µm was used for the metal powder to form the alloy part 11. In Example 32, spherical bronze-based alloy having an average particle diameter of 200 µm and a standard deviation of 14 µm was used for the metal powder to form the alloy part 11. In all Example 17 to Example 32, PTFE with added graphite at 15 vol% was used for the resin to form the resin part 12.

As shown in FIG. 10, in Example 17 to Example 32, it is understood that the seizure resistance is more improved when the distance L satisfies 40 µm ≤ L ≤ 240 µm and when the distance B satisfies 10 µm ≤ B ≤ 450 µm.

As described above, it is understood that the seizure resistance is improved by specifying the relationship between the alloy-exposed portion 111 and the resin part 12 on the exposed surface 20 in the present embodiment. **Specifically,** the seizure resistance of the sliding member 10 is improved by appropriately controlling the alloy part **11** and the resin part 12 that are exposed coexisting on the exposed surface 20. **In** this case, the diameter D of the first inscribed circle 31 included in the alloy part **11** satisfies 40 µm ≤ D ≤ 240 µm. This allows the alloy-exposed portion **111** exposed on the exposed surface 20 to have a size not excessively small and not excessively large so as to include the first inscribed circle 31 with the diameter D. Therefore, the seizure resistance can be further improved.

The present invention described above is not limited to the above embodiments, and can be applied to various embodiments within a range not departing from the spirit thereof.

## Claims

1. A sliding member (10), comprising:
a substrate (13);
a porous alloy part (11) that is provided on one end surface side of the substrate (13) and that is formed with a Cu-based alloy containing Sn; and
a resin part (12) impregnated in pores formed with the porous alloy part (11),
wherein
the alloy part (11) and the resin part (12) coexist, and a proportion of the alloy part (11) is set to be large on a side close to the substrate (13) in a thickness direction,
in any exposed surface (20) to be exposed by removal from an end surface opposite to the substrate (13) to a side of the substrate (13), of the alloy part (11) in which the resin part (12) is impregnated, the alloy part (11) and the resin part (12) form a sea-island structure in which the alloy part (11) is distributed as an island-shaped alloy-exposed portion (111) in the resin part (12) as a sea,
in the exposed surface (20), when a surface having a proportion of an area of the alloy-exposed portion (111) in this exposed surface (20) being within a preset set range S is defined as an observation surface (21), and
when any observation region (22) is set in the observation surface (21), and five inscribed circles with the largest diameters among inscribed circles inscribing each of the island-shaped alloy-exposed portion (111) distributed in the resin part (12) in this observation region (22) are defined as first inscribed circles (31),
all diameters D of the first inscribed circles (31) satisfy 40 µm ≤ D ≤ 240 µm.

2. The sliding member according to claim 1, wherein a distance L of an average value of shortest distances between centers of the first inscribed circles (31) satisfies 350 µm ≤ L ≤ 1300 µm.

3. The sliding member according to claim 1, wherein
in the alloy-exposed portion (111), when two or more inscribed circles are settable in one of the alloy-exposed portion (111) and a second largest inscribed circle after the first inscribed circle (31) is defined as a second inscribed circle (32),
a distance B between centers of the first inscribed circle (31) and the second inscribed circle (32) satisfies 10 µm ≤ B ≤ 450 µm.

4. The sliding member according to claim 1, wherein a resin to form the resin part (12) has a contact angle W with water of within a range of 60° ≤ W ≤ 130°.

5. The sliding member according to claim 1, wherein the set range S being the proportion of the area of the alloy-exposed portion (111) in an entirety of the observation surface (21) is 5% ≤ S ≤ 60%.
